# EUROPÄISCHE PATENTSCHRIFT

(11) **EP 3 853 505 B1**
(45) Veröffentlichungstag und Bekanntmachung des Hinweises auf die Patenterteilung: **06.12.2023**
(21) Anmeldenummer: 19766010.3
(22) Anmeldetag: 09.09.2019
(51) Int. Cl.: F16J 15/34

(54) **GLEITRINGDICHTUNG UND DREHDURCHFÜHRUNG MIT GLEITRINGDICHTUNG**
MECHANICAL SEAL, AND ROTARY LEADTHROUGH HAVING A MECHANICAL SEAL
GARNITURE D'ÉTANCHÉITÉ À ANNEAU GLISSANT ET PASSANT TOURNANT AVEC GARNITURE D'ÉTANCHÉITÉ À ANNEAU GLISSANT

(30) Priorität: 17.09.2018 DE 102018215736
(43) Veröffentlichungstag der Anmeldung: 28.07.2021
(73) Patentinhaber: Christian Maier GmbH & Co. KG, 89520 Heidenheim (DE)
(72) Erfinder: SCHWENK, Günther, 89520 Heidenheim (DE)
(74) Vertreter: Dr. Weitzel & Partner
(86) Internationale Anmeldenummer: PCT/EP2019/073932
(87) Internationale Veröffentlichungsnummer: WO 2020/058013

(56) Entgegenhaltungen:
- EP-A1- 0 989 343
- EP-A2- 1 479 929
- EP-A2- 2 362 122
- CN-B- 103 791 095
- DE-A1- 1 902 396
- DE-A1- 3 301 947

## Beschreibung

Die vorliegende Erfindung betrifft eine Gleitringdichtung zur Abdichtung wenigstens eines sich in einem stationären Bauteil und/oder einem rotierenden Bauteil erstreckenden, ein Fluid führenden Kanals und/oder Raumes gegenüber der Umgebung gemäß dem Oberbegriff von Anspruch 1, sowie eine Drehdurchführung mit einer solchen Gleitringdichtung.

DE 33 01 947 A1 offenbart eine gattungsgemäße Gleitringdichtung zur Abdichtung einer Pumpenwelle mit einem den Gleitring in der Axialrichtung beweglich aufnehmenden Gehäuse, das den Gleitring mit einem zylindrischen Umfangsbauteil umschließt, das anliegend an einer Innenwandung des Pumpengehäuses in eine Aussparung in diesem Pumpengehäuse eingesetzt ist. Das Gehäuse der Gleitringdichtung weist eine Verdrehsicherung für den Gleitring auf, sowie einen Boden, an dem sich ein den Gleitring aus dem Gehäuse herausdrückendes Federelement abstützt. Auf der offenen Seite des Gehäuses ist ein ringförmiger Deckel vorgesehen, der stirnseitig auf das Gehäuse aufgelegt und gegenüber diesem abgedichtet ist. Der Deckel ist gestuft ausgeführt, mit einem Flansch, der einen Anschlag zum Festhalten des Gehäuses in der Aussparung im Pumpengehäuse bildet. Der Deckel hält ferner den Gleitring im Gehäuse, ohne die Axialbewegung des Gleitringes zu behindern.

Die deutsche Patentanmeldung 10 2017 218 689.5 offenbart eine Gleitringdichtung mit einem zylindrischen Gehäuse, das den Gleitring in Umfangsrichtung umschließt und an seiner offenen Seite eine radial nach innen vorstehende Umbördelung aufweist, die einer Anschlagfläche des Gleitringes in der Axialrichtung gegenübersteht, sodass der Gleitring bei einer maximal zulässigen Bewegung in der Axialrichtung an der Umbördelung anschlägt. Ferner ist ein Geber in Form eines Magneten vorgesehen, der sich ebenfalls an der Anschlagfläche abstützt oder an dieser anliegt und mit einem außen an dem Gehäuse angeschlossenen stationären Sensor einen Positionssensor bildet, mit dem die axiale Position des Gleitringes erfasst werden kann, sodass der Verschleiß der Gleitringdichtung bestimmt werden kann.

Zum weiteren Stand der Technik wird verwiesen auf EP 0 989 343 A1, EP 1 479 929 A2, CN 103791095 B, EP 2 362 122 A2 und DE 1 902 396.

Nachteilig an den zuvor genannten Gleitringdichtungen ist, dass sich das Gehäuse der Gleitringdichtung im stationären Bauteil, welches das Gehäuse über dem äußeren Umfang eng umschließend aufnimmt, verdrehen kann. Bei Vorsehen eines Positionssensors führt dies beispielsweise zum Abscheren des stationären Sensors vom Gehäuse.

Der vorliegenden Erfindung liegt die Aufgabe zugrunde, eine Gleitringdichtung, insbesondere mit einem Positionssensor, anzugeben, bei welcher ein unbeabsichtigtes Verdrehen des Gleitringdichtungsgehäuses vermieden wird. Die erfindungsgemäße Lösung soll sich insbesondere durch eine kompakte, kostengünstige und leicht integrierbare Konstruktion auszeichnen.

Die erfindungsgemäße Aufgabe wird durch eine Gleitringdichtung mit den Merkmalen von Anspruch 1 gelöst. In den abhängigen Ansprüchen werden besonders vorteilhafte und zweckmäßige Ausgestaltungen der Erfindung sowie eine Drehdurchführung mit einer erfindungsgemäßen Gleitringdichtung angegeben.

Eine erfindungsgemäße Gleitringdichtung zur Abdichtung wenigstens eines sich in einem stationären Bauteil und/oder einem rotierenden Bauteil erstreckenden, ein Fluid führenden Kanals und/oder Raumes gegenüber der Umgebung weist einen Gleitring auf, der sich in Axialrichtung gegen einen Gegenring dichtend abstützt. Bei einer Ausführungsform der Erfindung erstreckt sich der wenigstens eine das Fluid führende Kanal aus einem stationären Bauteil in ein rotierendes Bauteil oder aus einem rotierenden Bauteil in das stationäre Bauteil, demnach durch eine Drehdurchführung. Die Drehdurchführung dient der Übergabe des Fluids aus dem jeweiligen Kanalabschnitt des stationären Bauteils in den jeweiligen Kanalabschnitt des rotierenden, das heißt um eine Drehachse umlaufenden Bauteils oder umgekehrt. Die Erfindung kann jedoch auch unabhängig von einer Drehdurchführung in jeglichem Bauteil angewendet werden, bei dem eine Abdichtung durch eine Gleitringdichtung Verwendung findet. Insofern ist der das Fluid führende Kanal ein beliebiger Raum in einem stationären Bauteil und/oder in einem rotierenden Bauteil, der durch die Gleitringdichtung gegenüber einer Umgebung abgedichtet wird. Bei der Umgebung kann es sich um einen anderen Raum in dem Bauteil und/oder einem anderen Bauteil handeln, oder um eine Umgebung, die nicht mehr durch Gehäuseteile eingeschlossen wird. Die Umgebung kann drucklos oder druckbeaufschlagt sein. Das Fluid kann in dem Kanal und/oder Raum strömen oder stationär sein. Nur beispielhaft wird auf die Abdichtung wenigstens eines ein Fluid führenden Kanals und/oder Raumes in einer Pumpe, wie Flüssigkeitspumpe oder Gaspumpe, einem Kompressor und anderen Arbeitsmaschinen verwiesen.

Dadurch, dass der Gleitring sich in der Axialrichtung, das heißt in Richtung der Drehachse des umlaufenden Bauteils, gegen den Gegenring dichtend abstützt, unterliegt er einem Verschleiß. Beispielsweise ist der Gleitring aus einem Kohlenstoff hergestellt beziehungsweise umfasst solchen Kohlenstoff. Um zu vermeiden, dass durch den Verschleiß, der den Gleitring in der Axialrichtung kürzt, eine Undichtigkeit beispielsweise in der Drehdurchführung entsteht, ist der Gleitring in der Axialrichtung beweglich und zur Kompensation des Verschleißes mit seiner stirnseitigen Dichtfläche elastisch gegen den Gegenring abgestützt. Ein fortschreitender Verschleiß wird somit durch zunehmende axiale Verlagerung des Gleitringes in Richtung des Gegenringes kompensiert. Zusätzlich oder alternativ kann auch der Gegenring im Bereich einer an der Dichtfläche des Gleitringes anliegenden Gegenfläche einem Abrieb beziehungsweise Verschleiß unterliegen, sodass zu dessen Kompensation eine axiale Verlagerung des Gleitringes durch dessen elastische Vorspannung erfolgt.

Um das Ausmaß des Verschleißes beziehungsweise der bereits erfolgten axialen Bewegung des Gleitringes bewerten zu können, ist gemäß der Erfindung ein Positionssensor zur Erfassung der Position des Gleitringes in der Axialrichtung vorgesehen.

Die erfindungsgemäße Gleitringdichtung weist ein Gehäuse auf, das den Gleitring aufnimmt und in welchem der Gleitring in der Axialrichtung beweglich ist. Das Gehäuse weist einen Umfangsteil auf, der den Gleitring in der Umfangsrichtung umschließt. Dieser Umfangsteil kann beispielsweise von einem stationären Bauteil einer Maschine umschlossen werden, in welcher die Gleitringdichtung den Kanal und/oder Raum abdichtet.

Erfindungsgemäß weist das Gehäuse einen sich in der Axialrichtung an den Umfangsteil anschließenden Flansch auf, der einteilig mit dem Umfangsteil ausgebildet ist oder stoffschlüssig an dem Umfangsteil angeschlossen ist. Der Flansch bildet wenigstens einen radial nach innen gerichteten Vorsprung aus und der Gleitring weist eine dem radial nach innen gerichteten Vorsprung in der Axialrichtung gegenüberstehende Anschlagfläche auf, mit welcher der Gleitring bei einer maximal zulässigen Bewegung in der Axialrichtung an dem Vorsprung anschlägt, und der Flansch bildet ferner wenigstens einen radial nach außen gerichteten Vorsprung aus, mit welchem er verdrehsicher an einem der beiden, das Gehäuse aufnehmenden Bauteile anschließbar beziehungsweise angeschlossen ist.

Gemäß der Erfindung dient der Flansch somit nicht nur zur Sicherung des Gleitringes gegen Herausrutschen aus dem Gehäuse, sondern zugleich als Verdrehsicherung des Gehäuses in dem das Gehäuse umschließenden Bauteil. Weil zusätzlich ein Positionssensor vorgesehen ist, so kann der Flansch zudem dem Anschluss des stationären Sensors, der mit einem am Gleitring angeschlossenen Geber des Positionssensors zusammenarbeitet, dienen. Insbesondere trägt allein der Flansch den stationären Sensor, unmittelbar oder über ein vom Flansch getragenes Bauteil, beispielsweise eine Konsole.

Gemäß einer Ausführungsform der Erfindung ist der Flansch kreisringförmig und insbesondere eben ausgeführt und steht radial nach innen sowie radial nach außen über den Umfangsteil über. Das bedeutet, der Umfangsteil schließt sich mit Abstand zum radial inneren Rand und zum radial äußeren Rand an den Flansch an.

Bevorzugt wird der Gleitring verdrehsicher im Gehäuse gehalten, beispielsweise mittels einer Hinterschneidung. Beispielsweise kann im Gleitring und/oder im Gehäuse eine Axialnut vorgesehen sein, in welche ein entsprechender gegengleicher Vorsprung des jeweils anderen Bauteils - Gehäuse oder Gleitring - formschlüssig eingreift.

Die Verdrehsicherung des Flansches an einem der beiden Bauteile - dem stationären Bauteil oder dem rotierenden Bauteil - kann gemäß einer Ausführungsform der Erfindung formschlüssig, das heißt durch Ausbilden wenigstens einer Hinterschneidung erfolgen. Beispielsweise weist der Flansch in seiner Umfangsrichtung hintereinander positionierte, über dem Umfang verteilt angeordnete Radialaussparungen und/oder Radialvorsprünge auf, die entsprechende gegengleiche Vorsprünge und/oder Aussparungen im Bauteil übergreifen beziehungsweise in diese eingreifen.

Gemäß einer vorteilhaften Ausführungsform der Erfindung weist der Flansch über dem Umfang verteilt angeordnete, in der Umfangsrichtung hintereinander positionierte Durchgangsöffnungen zum verdrehsicheren Anschließen des Flansches an dem Bauteil auf. Beispielsweise können Schrauben oder Stifte durch die Durchgangsöffnungen in das Bauteil eingebracht werden beziehungsweise der Flansch über entsprechende Stifte oder andere Vorsprünge am Bauteil geschoben werden, um einen Formschluss in der Umfangsrichtung zu erreichen.

Das Gehäuse ist beispielsweise aus Blech hergestellt, wobei der Flansch insbesondere am Umfangsteil angeschweißt ist. Dabei ist keine Schweißnaht entlang des gesamten Umfanges notwendig, sondern es können auch einzelne Abschnitte oder Punkte der Verschweißung vorgesehen sein. Der Flansch kann damit als ebener Blechring hergestellt werden, beispielsweise durch Stanzen, und anschließend am zylinderförmigen oder topfförmigen Umfangsteil angeschlossen werden.

Gemäß einer Ausführungsform der Erfindung sind neben den Durchgangsöffnungen zum verdrehsicheren Anschließen des Flansches weitere über dem Umfang verteilt hintereinander angeordnete Zentrierbohrungen im Flansch vorgesehen. Diese können bei der Montage des Flansches am Umfangsteil der Zentrierung des Flansches gegenüber dem Umfangsteil dienen. Ferner können solche Zentrierbohrungen dem Zentrieren des Gehäuses im das Gehäuse aufnehmenden Bauteil dienen, falls erforderlich. Selbstverständlich ist es auch möglich, die Durchgangsöffnungen zum verdrehsicheren Anschluss des Flansches an dem Bauteil bei der Montage des Flansches an dem Umfangsteil als Zentrierbohrungen zu verwenden, sodass gegebenenfalls zusätzliche Zentrierbohrungen entfallen können.

Gemäß einer erfindungsgemäßen Ausführungsform ist ein Lagergehäuse vorgesehen, das Lager - Wälzlager oder Gleitlager - zum Lagern des rotierenden Bauteils aufnimmt. Der Flansch kann dann verdrehsicher an dem Lagergehäuse angeschlossen sein, insbesondere unmittelbar an dem Lagergehäuse angeschlossen sein, beispielsweise mittels der dargestellten Radialvorsprünge und/oder Radialaussparungen und/oder mit den über dem Umfang verteilt angeordneten Durchgangsöffnungen, durch die entsprechende Montagelemente wie Schrauben oder Stifte eingebracht sind.

Das Gehäuse des Gleitringes kann gemäß einer Ausführungsform der Erfindung das stationäre Bauteil oder das rotierende Bauteil, welches den das Fluid führenden Kanal und/oder Raum begrenzt, ausbilden. Beispielsweise kann in einem solchen Fall der Umfangsteil einen Anschluss zur Zufuhr oder Abfuhr des Fluids aufweisen, beispielsweise ein Anschlussgewinde für einen Fluidschlauch.

Bei der erfindungsgemäßen Ausführungsform mit Positionssensor zur Erfassung der Position des Gleitringes in der Axialrichtung ist am Gleitring wenigstens ein Geber befestigt, der sich mit dem Gleitring in der Axialrichtung bewegt. Beispielsweise ist der Geber in eine Radialbohrung des Gleitringes eingebracht und kann bevorzugt radial außen bündig mit dem Gleitring abschließen. Ferner ist ein radial außerhalb des Umfangsteils positionierter stationärer Sensor vorgesehen, der die Position des Gebers in der Axialrichtung erfasst, wobei der stationäre Sensor vom Umfangsteil und/oder vom Flansch getragen wird.

Gemäß einer bevorzugten Ausführungsform weist der Umfangsteil in dem Umfangsbereich, in welchem der stationäre Sensor gegenübersteht, einen Durchbruch auf, um die Signalübertragung zwischen Geber und stationärem Sensor zu verbessern.

Gemäß einer besonders vorzuziehenden Ausführungsform weist der Flansch eine sich in der Axialrichtung und in der Umfangsrichtung oder schräg nach außen oder in der Tangentialrichtung erstreckende Konsole auf, die mit Abstand zum Umfangsteil positioniert ist und den stationären Sensor trägt. Beispielsweise ist die Konsole als am Flansch angeschweißter Blechstreifen, insbesondere ebener Blechstreifen, ausgeführt. Der stationäre Sensor kann beispielsweise auf den Blechstreifen aufgeklebt sein. Gemäß einer Ausführungsform trägt die Konsole den stationären Sensor auf ihrer dem Umfangsteil zugewandten Oberfläche.

Der Flansch weist insbesondere eine diesen durchdringende Längsnut auf, die sich beispielsweise in Tangentialrichtung, Umfangsrichtung oder schräg nach außen erstreckt. Die Längsnut ist bevorzugt geradlinig. Diese Längsnut kann wenigstens ein Anschlusskabel des stationären Sensors aufnehmen. Somit kann das wenigstens eine Anschlusskabel von der Seite des stationären Sensors durch den Flansch hindurch auf die dem stationären Sensor abgewandte Seite des Flansches geführt werden und von dort beispielsweise nach außerhalb des das Gehäuse aufnehmenden Bauteils, beispielsweise durch einen Leckagekanal in diesem Bauteil.

Der Geber kann wenigstens einen Magneten umfassen oder durch diesen gebildet werden und der stationäre Sensor kann als Hall-Sensor ausgeführt sein, der die Position des wenigstens einen Magneten in der Axialrichtung erfasst.

Bevorzugt weist das Gehäuse einen Gehäuseboden auf, der einer der Dichtfläche abgewandten Stirnseite des Gleitringes gegenübersteht, und der Gleitring ist mittels eines Federelementes, insbesondere mittels einer Wellfeder, zwischen der Stirnseite und dem Gehäuseboden elastisch am Gehäuseboden abgestützt.

Der Gleitring umfasst insbesondere einen hohlzylinderförmigen Kohlering oder wird aus einem solchen gebildet, der eine die Dichtfläche ausbildende Stirnseite aufweist und insbesondere die dem Gehäuseboden zugewandte Stirnseite aufweist.

Insbesondere ist der Gleitring stationär und der Gegenring läuft relativ zum Gleitring um.

Gemäß einem Merkmal der vorliegenden Erfindung ist dem Gegenring ein Drehzahlsensor zugeordnet, der mit einem Geber im Gegenring zusammenarbeitet, um die Drehzahl des Gegenrings zu erfassen. Der Drehzahlsensor kann beispielsweise in der Axialrichtung neben dem Gehäuse der Gleitringdichtung positioniert sein und dort an dem stationären Bauteil befestigt sein. Bevorzugt ist jedoch, wenn das Gehäuse, wie zuvor dargestellt, mit einem stoffschlüssig oder einteilig an einem Umfangsteil angeschlossenen Flansch ausgeführt ist und dieser Flansch zugleich den Drehzahlsensor trägt.

Somit kann gemäß einer Ausführungsform der Erfindung der Flansch insbesondere auf seiner ersten axialen Seite den stationären Sensor des Positionssensors aufnehmen beziehungsweise tragen und auf seiner anderen axialen Seite den Drehzahlsensor aufnehmen beziehungsweise tragen. Die Sensoren können jeweils bevorzugt auf einer Konsole der dargestellten Art positioniert sein, beispielsweise auf angeschweißten und insbesondere in den Flansch eingesteckten Blechstreifen. Die Konsolen können in Umfangsrichtung des Flansches versetzt zueinander vorgesehen sein, insbesondere eingesteckt in verschiedene Öffnungen im Flansch. Jedoch ist es auch möglich, eine Konsole so durch eine Öffnung im Flansch zu stecken und dort zu befestigen, dass diese Konsole auf der einen axialen Seite des Flansches des stationären Sensor des Positionssensors zur Verschleißerfassung und auf der anderen axialen Seite den Drehzahlsensor zur Drehzahlerfassung trägt.

Der Geber für den Drehzahlsensor kann beispielsweise durch wenigstens eine Abflachung oder Kerbe oder andere Markierung auf dem äußeren Umfang oder auch auf einer Stirnseite des Gegenrings ausgeführt sein. Gemäß einer bevorzugten Ausgestaltung wird der Geber durch wenigstens einen Magneten gebildet und der Drehzahlsensor ist als Hall-Sensor ausgeführt.

Bei einer erfindungsgemäßen Drehdurchführung mit einem stationären Bauteil und einem rotierenden Bauteil und einem mit einer erfindungsgemäßen Gleitringdichtung abgedichteten Kanal, der sich in dem stationären Bauteil und dem rotierenden Bauteil erstreckt, ist der Flansch verdrehsicher am stationären Bauteil oder verdrehsicher am rotierenden Bauteil angeschlossen. Beispielsweise ist der Flansch verdrehsicher am stationären Bauteil angeschlossen und das stationäre Bauteil weist eine den Umfangsteil des Gehäuses, insbesondere anliegend, umschießende Innenwandung auf, in welcher eine wenigstens in der Umfangsrichtung begrenzte Aussparung vorgesehen ist, die angeordnet und dimensioniert ist, den stationären Sensor aufzunehmen.

Beispielsweise kann in dem stationären Bauteil auch der zuvor genannte Leckagekanal, insbesondere in Form einer Bohrung, vorgesehen sein, welcher durch die Gleitringdichtung übertretendes Fluid aus dem Bauteil abführt, und das wenigstens eine Anschlusskabel des stationären Sensors kann durch den Leckagekanal geführt sein, insbesondere nachdem es ausgehend vom stationären Sensor vorher durch die Längsnut durchgeführt ist.

Die vorliegende Erfindung ist nicht auf eine Drehdurchführung mit einer Gleitringdichtung beschränkt. Vielmehr können andere Bauteile oder Maschinen mit einer erfindungsgemäßen Gleitringdichtung zur Abdichtung eines Kanals oder Raumes ausgeführt werden. Beispielsweise wird auf eine Pumpe mit einer solchen Gleitringdichtung verwiesen.

Die Erfindung soll nachfolgend anhand eines Ausführungsbeispiels und den Figuren exemplarisch beschrieben werden.

Es zeigen:
- Figur 1: eine schematische Darstellung einer erfindungsgemäßen Gleitringdichtung;
- Figur 2: eine weitere schematische Schnittansicht einer Drehdurchführung mit einer erfindungsgemäßen Gleitringdichtung;
- Figur 3: eine Draufsicht auf ein Ausführungsbeispiel eines Flansches einer erfindungsgemäßen Gleitringdichtung;
- Figur 4: eine schematische Schnittdarstellung einer weiteren erfindungsgemäßen Gleitringdichtung;
- Figur 5: eine stirnseitige Draufsicht auf den Flansch der Gleitringdichtung gemäß der Figur 4;
- Figur 6: eine Schnittdarstellung durch das Gehäuse der Gleitringdichtung aus der Figur 4;
- Figur 7: eine Schnittdarstellung analog jener der Figur 2 mit einem zusätzlichen Drehzahlsensor;
- Figur 8: eine Schnittdarstellung analog jener der Figur 4 mit einem zusätzlichen Drehzahlsensor.

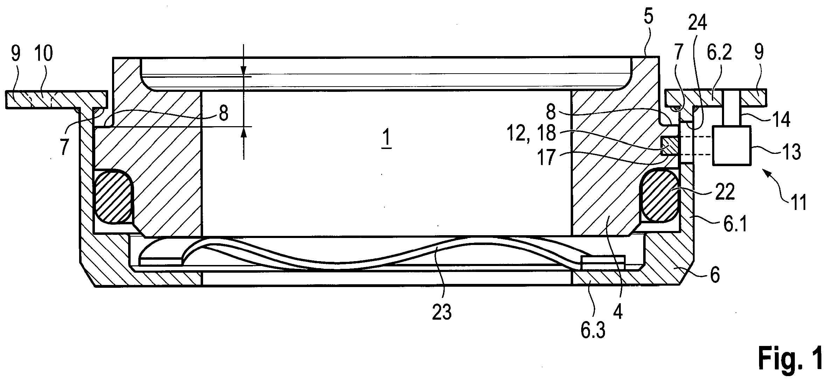

In der Figur 1 ist eine erfindungsgemäß ausgeführte Gleitringdichtung dargestellt, umfassend ein Gehäuse 6 mit einem Umfangsteil 6.1 und einem in der Axialrichtung stirnseitig an diesem an dessen offenen Ende angeschlossenen Flansch 6.2. Der Flansch 6.2 ist, wie angedeutet, beispielsweise am Umfangsteil 6.1 angeschweißt.

Der Umfangsteil 6.1 ist zylindrisch ausgeführt und umschließt den Gleitring 4 in der Umfangsrichtung. Der Gleitring 4 ist mittels einer Dichtung 22 abgedichtet im Gehäuse 6 eingesetzt, hier abgedichtet gegen den Umfangsteil 6.1.

Der Gleitring 4 weist auf seiner aus dem Gehäuse 6 herausragenden Stirnseite eine Dichtfläche 5 auf. Auf seiner der Dichtfläche 5 abgewandten Stirnseite wird der Gleitring 4 mittels eines Federelementes 23, beispielsweise in Form einer Wellfeder, druckelastisch beaufschlagt. Das Federelement 23 stützt sich am Gehäuseboden 6.3 des Gehäuses 6 ab.

Der Gleitring 4 kann soweit durch das Federelement 23 aus dem Gehäuse 6 gedrückt werden, bis er mit seiner vom Federelement 23 abgewandten Anschlagfläche 8 an einem radial nach innen gerichteten Vorsprung 7 des Flansches 6.2 anschlägt. Dadurch kann ein an der Dichtfläche 5 auftretender Verschleiß, der den Gleitring 4 in der Axialrichtung kürzt, kompensiert werden.

Der Flansch 6.2 weist ferner einen radial nach außen gerichteten Vorsprung 9 auf, der zum einen zum verdrehsicheren Anschluss des Gehäuses 6 an einem das Gehäuse 6 aufnehmenden Bauteil dient und zum anderen zum Anschluss des stationären Sensors 13 eines Positionssensors 11 dient. Zusätzlich oder alternativ könnte der stationäre Sensor 13 auch am Umfangsteil 6.1 des Gehäuses 6 angeschlossen sein, wie durch die gestrichelte Linie angedeutet ist.

Der stationäre Sensor 13 arbeitet mit einem Geber 12 zusammen, der hier in Form eines Magneten 18 in eine Radialbohrung 17 des Gleitrings 4 eingebracht ist. Im Bereich des stationären Sensors 13 beziehungsweise des Gebers 12 ist ein Durchbruch 24 im Umfangsteil 6.1 vorgesehen, um den Signalfluss vom Geber 12 zum stationären Sensor 13 nicht zu behindern.

Der stationäre Sensor 13 wird durch eine am radial nach außen gerichteten Vorsprung 9 des Flansches 6.2 angeschlossene Konsole 14 getragen. Insbesondere ist die Konsole 14 stoffschlüssig am Flansch 6.2 angeschlossen oder einteilig mit diesem ausgeführt, und der stationäre Sensor 13 ist insbesondere formschlüssig oder stoffschlüssig an der Konsole 14 angeschlossen.

Der Gleitring 4 dichtet mit seiner Dichtfläche 5 zusammen mit einem in der Figur 1 nicht dargestellten Gegenring den Kanal 1, der ein Fluid wie Wasser oder Gas führt, ab.

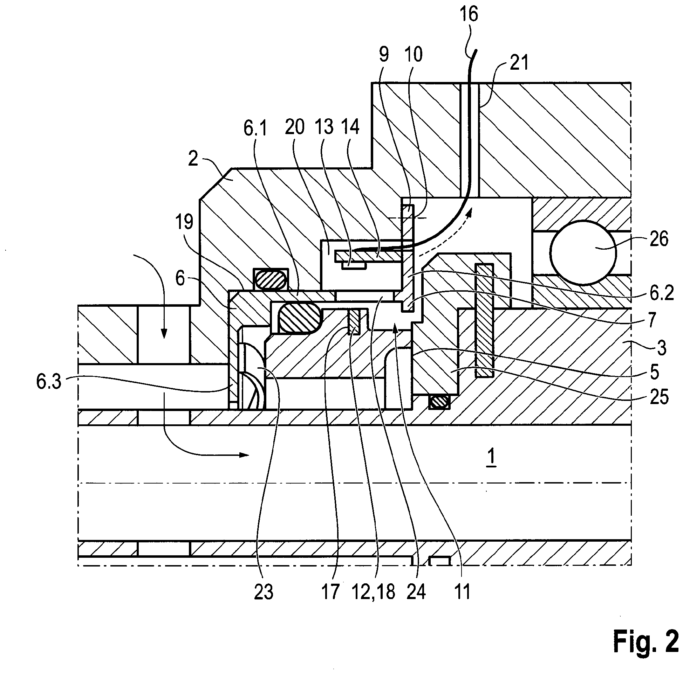

In der Figur 2 ist ein Verwendungsbeispiel einer erfindungsgemäßen Gleitringdichtung gezeigt. Diese entspricht weitgehend der Gestaltung gemäß der Figur 1. Abweichend ist hier der stationäre Sensor 13 jedoch auf einer radial nach innen gerichteten Oberfläche der Konsole 14 angeschlossen, insbesondere angeklebt.

Bei der Drehdurchführung gemäß der Figur 2 ist das Gehäuse 6 verdrehsicher in das stationäre Bauteil 2 eingesetzt. Hierfür ist der Flansch 6.2 durch die Durchgangsöffnungen 10 im stationären Bauteil 2 verschraubt oder verstiftet.

Das Gehäuse 6 weist wiederum den Umfangsteil 6.1 auf, der radial innen an einer Innenwandung 19 des stationären Bauteils 2 anliegt. Das stationäre Bauteil 2 weist ferner eine Aussparung 20 auf, die die Konsole 14 zusammen mit dem stationären Sensor 13 aufnimmt. Um den Positionssensor 11 auszubilden, steht der stationäre Sensor 13 wiederum über den Durchbruch 24 dem in Form eines Magneten 18 ausgeführten Geber 12, der in eine Radialbohrung 17 im Gleitring 4 eingesetzt ist, gegenüber. Auch das Federelement 23, das die Dichtfläche 5 des Gleitrings 4 gegen den Gegenring 25 drückt und sich am Gehäuseboden 6.3 abstützt, ist dargestellt, wobei auch im Übrigen die entsprechenden Bezugszeichen aus der Figur 1 für entsprechende Bauteile verwendet werden.

Der Gegenring 25 ist Bestandteil des rotierenden Bauteils 3, das durch wenigstens ein Lager 26 im stationären Bauteil 2 gelagert ist und den Kanal 1 umschließt. Der Kanal 1 erstreckt sich ferner durch das stationäre Bauteil 2 hindurch, wie durch die Pfeile schematisch angedeutet ist, beispielsweise durch einen Zulauf oder Ablauf im stationären Bauteil 2.

Falls über die Dichtfläche 5, das heißt zwischen dem Gleitring 4 und dem Gegenring 25, eine Leckage austritt, was durch den gestrichelten Pfeil angedeutet ist, so wird diese durch den Leckagekanal 21 im stationären Bauteil 2 abgeleitet. Im gezeigten Ausführungsbeispiel dient ein solcher Leckagekanal 21 ferner dazu, wenigstens ein Anschlusskabel 16 des stationären Sensors 13 aus dem stationären Bauteil 2 heraus nach außen zu führen.

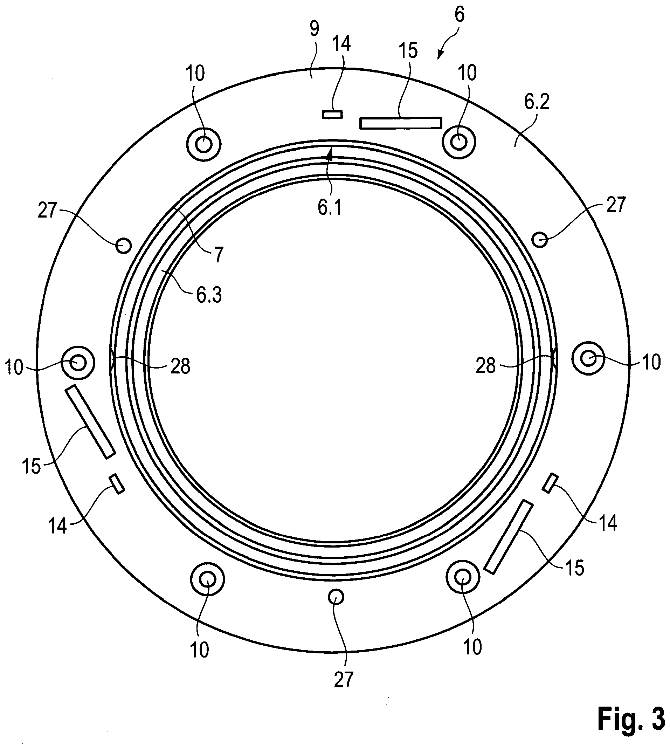

Um das Anschlusskabel 16 durch den Flansch 6.2 von der Seite des stationären Sensors 13 auf die in Axialrichtung abgewandte Seite des Leckagekanals 21 zu führen, kann im Flansch 6.2 wenigstens eine Öffnung, insbesondere Längsnut vorgesehen sein, durch die das Anschlusskabel 16 durchgeführt ist. Eine Anzahl solcher Längsnuten 15 sind aus der Figur 3 ersichtlich, die eine stirnseitige Draufsicht auf die sogenannte offene Seite des Gehäuses 6, das heißt die Seite der Dichtfläche 5, zeigt. Auch hier werden wieder für die entsprechenden Bauteile entsprechende Bezugszeichen verwendet, die den Bezugszeichen aus den Figuren 1 und 2 entsprechen.

So weist das Gehäuse 6 den Umfangsteil 6.1, den Flansch 6.2 und den Gehäuseboden 6.3 auf. Der Flansch 6.2 weist den radial nach innen gerichteten Vorsprung 7 und den radial nach außen gerichteten Vorsprung 9 auf. Im radial nach außen gerichteten Vorsprung 9 sind die Durchgangsöffnungen 10 zum verdrehsicheren Anschließen des Flansches 6.2 vorgesehen.

Ferner erkennt man in der Figur 3 die Öffnungen, in welche die Konsole 14 zu ihrer Fixierung einsteckbar ist. Neben diesen Öffnungen sind die hier in Tangentialrichtung verlaufenden Längsnuten 15 für das Anschlusskabel des stationären Sensors vorgesehen.

Im gezeigten Ausführungsbeispiel sind jeweils drei Öffnungen für die Konsolen 14 und drei Längsnuten 15 vorgesehen. Dies ermöglicht die Auswahl einer geeigneten Position für den stationären Sensor. Selbstverständlich könnten somit auch entsprechend mehrere stationäre Sensoren eingesetzt werden.

Bei der Ausgestaltung gemäß der Figur 3 weist der Flansch 6.2 beziehungsweise dessen radial nach außen gerichteter Vorsprung 9 Zentrierbohrungen 27 auf, die dem Zentrieren des Flansches 6.2 auf dem Umfangsteil 6.1 dienen, bevor und/oder während der Flansch 6.2 stoffschlüssig am Umfangsteil 6.1 angeschlossen wird. Gleichzeitig können diese Zentrierbohrungen 27 auch dem Zentrieren des Gehäuses 6 in dem Bauteil dienen, in das das Gehäuse 6 aufgenommen wird.

Bei dem Ausführungsbeispiel gemäß der Figur 3 weist das Gehäuse 6 ferner radial nach innen gerichtete Vorsprünge 28 auf, die in entsprechende Aussparungen im Gleitring eingreifen, um zu verhindern, dass sich der Gleitring in Umfangsrichtung gegenüber dem Gehäuse 6 verdreht.

Anstelle des im Ausführungsbeispiel dargestellten am Umfangsteil 6.1 stoffschlüssig, insbesondere durch Schweißen, angeschlossenen Flansches 6.2 könnte der Flansch 6.2 auch durch Umformen des Gehäuses 6 am Umfangsteil 6.1 hergestellt werden. Beispielsweise kann das Gehäuse 6 an seinem offenen Ende zunächst nach innen und anschließend nach außen oder umgekehrt umgebogen werden, um den radial nach innen gerichteten Vorsprung 7 und den radial nach außen gerichteten Vorsprung 9 auszubilden.

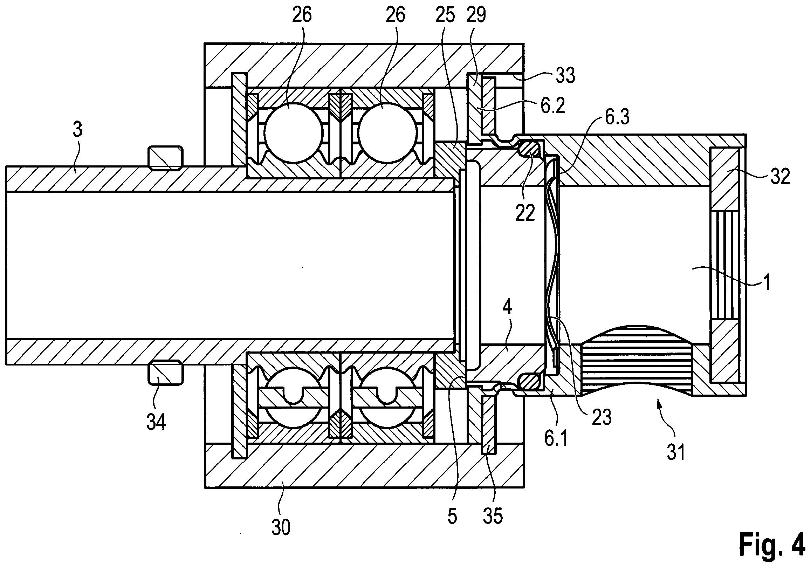

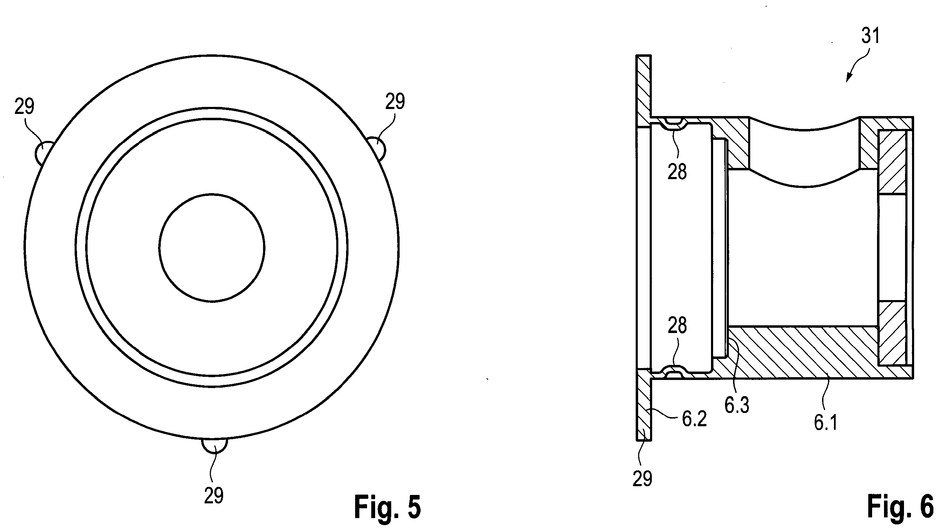

Bei der in den Figuren 4 bis 6 dargestellten Ausführungsform bildet das Gehäuse 6 der Gleitringdichtung zugleich das stationäre Bauteil 2 beziehungsweise einen Bestandteil des stationären Bauteils 2 aus, das den Kanal 1 umschließt. Beispielsweise weist der Umfangsteil 6.1 einen Anschluss 31 in Form eines Zulaufs oder Ablaufs für das durch den Kanal 1 geführte Medium auf. Beispielsweise kann für den Anschluss 31 ein Anschlussgewinde für einen Fluidschlauch (oder Mediumschlauch) vorgesehen sein.

Bei der in den Figuren 4 bis 6 dargestellten Ausführungsform ist der Umfangsteil 6.1 in Richtung der Drehachse der Gleitringdichtung über den Gehäuseboden 6.3 hinaus verlängert, um den Anschluss 31 einbringen zu können, der insbesondere in der Radialrichtung ausgerichtet ist. Stirnseitig wird der Kanal 1 durch den Deckel 32 verschlossen, der vollständig geschlossen ausgeführt sein kann oder gegebenenfalls zusätzlich oder alternativ einen Anschluss 31 für das Fluid ausbilden kann.

Wie beim vorherigen Ausführungsbeispiel stützt sich das Federelement 23 auf dem Gehäuseboden 6.3 ab, um die Dichtfläche 5 des Gleitringes 4 gegen den Gegenring 25 zu pressen.

Der Gegenring 25 läuft mit dem rotierenden Bauteil 3 um, das mittels der Lager 26, hier Wälzlager, in einem Lagergehäuse 30 gelagert ist. Der Flansch 6.2 des Gehäuses 6 der Gleitringdichtung, der wiederum einteilig mit dem Umfangsteil 6.1 ausgeführt beziehungsweise stoffschlüssig an diesem angeschlossen ist, ist drehfest am Lagergehäuse 30 angeschlossen. Hierfür weist im gezeigten Ausführungsbeispiel der Flansch 6.2 Radialvorsprünge 29 auf, die in entsprechende Axialnuten 33 im Lagergehäuse 30 eingreifen. Der Flansch 6.2 ist in der Axialrichtung beispielsweise mit einem Sicherungsring 35, der beispielsweise als Sprengring ausgebildet sein kann, gesichert.

Im gezeigten Ausführungsbeispiel ist auf das rotierende Bauteil 3 eine Mutter 34 aufgeschraubt. Dies ist jedoch nicht zwingend.

Obwohl dies nicht im Einzelnen dargestellt ist, trägt das Gehäuse 6 gemäß einer bevorzugten Ausführungsform den stationären Sensor eines Positionssensors, wie dies bei der Gestaltung gemäß den Figuren 1 bis 3 dargestellt ist. Dementsprechend kann der Flansch 6.2 entsprechend der Darstellung gemäß der Figur 3 gestaltet sein, wobei insbesondere zusätzlich die Radialvorsprünge 29 vorgesehen sind und gegebenenfalls auf die Durchgangsöffnungen 10 verzichtet wird.

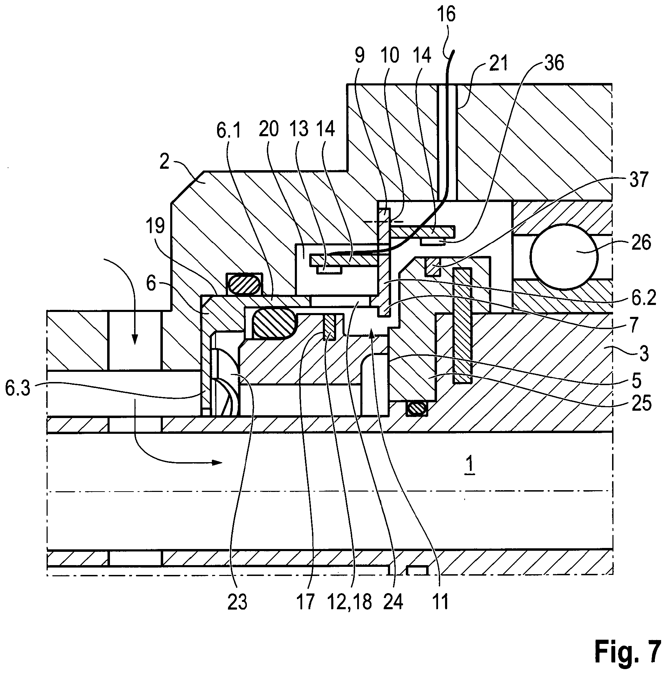

Bei der Ausgestaltung gemäß der Figur 7 trägt der Flansch 6.2 auf der dem stationären Sensor 13 abgewandten Seine mittels einer weiteren Konsole 14 einen Drehzahlsensor 36, der mit einem Geber 37 im Gegenring 25 zusammenarbeitet, um die Drehzahl des Gegenrings 25 und damit des rotierenden Bauteils 3 zu erfassen. Die Konsole 14 für den Drehzahlsensor 36 kann beispielsweise entsprechend der Konsole 14 für den stationären Sensor 13 am Flansch 6.2 montiert sein. Alternativ ist es auch möglich, die beiden Konsolen 14 für den stationären Sensor 13 und den Drehzahlsensor 36 einteilig auszuführen, beispielsweise als durch den Flansch 6.2 durchgestecktes Blechteil.

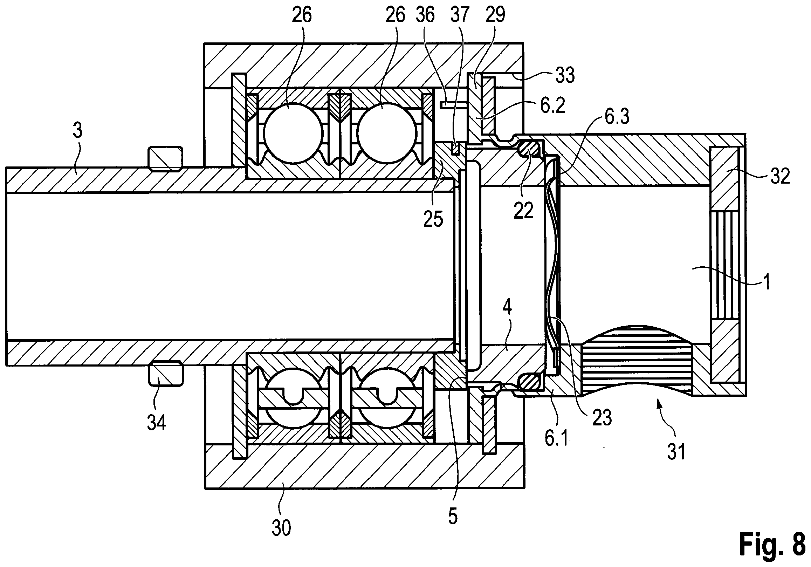

Die Figur 8 zeigt ein weiteres Ausführungsbeispiel analog jenem der Figuren 4 bis 6, ebenfalls zusätzlich mit einem Drehzahlsensor 36, der mit einem Geber 37 im Gegenring 25 zusammenarbeitet, um die Drehzahl des Gegenringes 25 beziehungsweise des rotierenden Bauteils 3 zu erfassen.

### Bezugszeichenliste

- 1: Kanal
- 2: stationäres Bauteil
- 3: rotierendes Bauteil
- 4: Gleitring
- 5: Dichtfläche
- 6: Gehäuse
- 6.1: Umfangsteil
- 6.2: Flansch
- 6.3: Gehäuseboden
- 7: radial nach innen gerichteter Vorsprung
- 8: Anschlagfläche
- 9: radial nach außen gerichteter Vorsprung
- 10: Durchgangsöffnung
- 11: Positionssensor
- 12: Geber
- 13: stationärer Sensor
- 14: Konsole
- 15: Längsnut
- 16: Anschlusskabel
- 17: Radialbohrung
- 18: Magnet
- 19: Innenwandung
- 20: Aussparung
- 21: Leckagekanal
- 22: Dichtung
- 23: Federelement
- 24: Durchbruch
- 25: Gegenring
- 26: Lager
- 27: Zentrierbohrung
- 28: Vorsprung
- 29: Radialvorsprung
- 30: Lagergehäuse
- 31: Anschluss
- 32: Deckel
- 33: Axialnut
- 34: Mutter
- 35: Sicherungsring
- 36: Drehzahlsensor
- 37: Geber

## Patentansprüche

1. Gleitringdichtung zur Abdichtung wenigstens eines sich in einem stationären Bauteil (2) und/oder einem rotierenden Bauteil (3) erstreckenden, ein Fluid führenden Kanals (1) und/oder Raumes gegenüber der Umgebung,
mit einem Gleitring (4), der sich in Axialrichtung gegen einen Gegenring (25) dichtend abstützt und zur Kompensation eines Verschleißes an seiner stirnseitigen Dichtfläche (5) oder an einer Gegenfläche elastisch und in der Axialrichtung beweglich mit dieser Dichtfläche (5) gegen den Gegenring (25) abgestützt ist;
mit einem den Gleitring (4) in der Axialrichtung beweglich aufnehmenden Gehäuse (6), das den Gleitring (4) mit einem Umfangsteil (6.1) in der Umfangsrichtung umschließt; wobei
das Gehäuse (6) einen sich in der Axialrichtung an den Umfangsteil (6.1) anschließenden Flansch (6.2) aufweist, wobei der Flansch (6.2) wenigstens einen radial nach innen gerichteten Vorsprung (7) ausbildet und der Gleitring (4) eine dem radial nach innen gerichteten Vorsprung (7) in der Axialrichtung gegenüberstehende Anschlagfläche (8) aufweist, mit welcher der Gleitring (4) bei einer maximal zulässigen Bewegung in der Axialrichtung in Richtung aus dem Gehäuse (6) heraus an dem Vorsprung (7) anschlägt, und
der Flansch (6.2) wenigstens einen radial nach außen gerichteten Vorsprung (9) ausbildet;
**dadurch gekennzeichnet, dass**
der Flansch (6.2) einteilig mit dem Umfangsteil (6.1) ausgebildet oder stoffschlüssig an diesem angeschlossen ist;
der Flansch (6.2) mit dem wenigsten einen radial nach außen gerichteten Vorsprung (9) verdrehsicher an einem der beiden das Gehäuse (6) aufnehmenden Bauteile (2, 3) anschließbar oder angeschlossen ist; und
die Gleitringdichtung einen Positionssensor (11) zur Erfassung der Position des Gleitringes (4) in der Axialrichtung aufweist, mit einem am Gleitring (4) befestigten, sich mit dem Gleitring (4) in der Axialrichtung bewegenden Geber (12) und einem radial außerhalb des Umfangsteils (6.1) positionierten stationären Sensor (13), der die Position des Gebers (12) in der Axialrichtung erfasst, wobei der Sensor (13) vom Umfangsteil (6.1) und/oder vom Flansch (6.2) getragen wird.

2. Gleitringdichtung gemäß Anspruch 1, **dadurch gekennzeichnet, dass** der Flansch (6.2) kreisringförmig und insbesondere eben ist und radial innen wie radial außen über den Umfangsteil (6.1) übersteht.

3. Gleitringdichtung gemäß einem der Ansprüche 1 oder 2, **dadurch gekennzeichnet, dass** der Gleitring (4) verdrehsicher im Gehäuse (6) gehalten wird, insbesondere mittels einer Hinterschneidung.

4. Gleitringdichtung gemäß einem der Ansprüche 1 bis 3, **dadurch gekennzeichnet, dass** der Flansch (6.2) über dem Umfang verteilt angeordnete, in der Umfangsrichtung hintereinander positionierte Radialaussparungen und/oder Radialvorsprünge (29) zum verdrehsicheren Anschließen des Flansches (6.2) an dem Bauteil (2, 3) aufweist.

5. Gleitringdichtung gemäß einem der Ansprüche 1 bis 4, **dadurch gekennzeichnet, dass** der Flansch (6.2) über dem Umfang verteilt angeordnete, in der Umfangsrichtung hintereinander positionierte Durchgangsöffnungen (10) zum verdrehsicheren Anschließen des Flansches (6.2) an dem Bauteil (2, 3) aufweist.

6. Gleitringdichtung gemäß einem der Ansprüche 1 bis 5, **dadurch gekennzeichnet, dass** das Gehäuse (6) aus Blech hergestellt ist, wobei der Flansch (6.2) insbesondere an dem Umfangsteil (6.1) angeschweißt ist.

7. Gleitringdichtung gemäß einem der Ansprüche 1 bis 6, **dadurch gekennzeichnet, dass** der Flansch (6.2) verdrehsicher an einem Lagergehäuse (30) angeschlossen ist, das Lager (26), insbesondere Wälzlager, zum Lagern des rotierenden Bauteils (3) aufnimmt.

8. Gleitringdichtung gemäß einem der Ansprüche 1 bis 7, **dadurch gekennzeichnet, dass** der Flansch (6.2) eine sich in der Axialrichtung und in Umfangsrichtung, Tangentialrichtung oder schräg nach außen erstreckende Konsole (14), die insbesondere als am Flansch (6.2) angeschweißter Blechstreifen ausgeführt ist, aufweist, wobei die Konsole (14) mit Abstand zum Umfangsteil (6.1) positioniert ist und den stationären Sensor (13), insbesondere auf ihrer dem Umfangsteil (6.1) zugewandten Oberfläche, trägt.

9. Gleitringdichtung gemäß einem der Ansprüche 1 bis 8, **dadurch gekennzeichnet, dass** der Flansch (6.2) wenigstens eine diesen durchdringende Längsnut (15) aufweist, die sich insbesondere in Tangentialrichtung, schräg nach außen oder in der Umfangsrichtung erstreckt, welche wenigstens ein Anschlusskabel (16) des stationären Sensors (13) aufnimmt.

10. Gleitringdichtung gemäß einem der Ansprüche 1 bis 9, **dadurch gekennzeichnet, dass** der Geber (12) in eine Radialbohrung (17) des Gleitringes (4) eingebracht ist und insbesondere radial außen bündig mit dem Gleitring (4) abschließt.

11. Gleitringdichtung gemäß einem der Ansprüche 1 bis 10, **dadurch gekennzeichnet, dass** der Geber (12) wenigstens einen Magneten (18) umfasst oder durch diesen gebildet wird und der stationäre Sensor (13) als Hall-Sensor ausgeführt ist, der die Position des Magneten (18) in der Axialrichtung erfasst.

12. Gleitringdichtung gemäß einem der Ansprüche 1 bis 11, **dadurch gekennzeichnet, dass** das Gehäuse (6) einen Gehäuseboden (6.3) aufweist, der einer der Dichtfläche (5) abgewandten Stirnseite des Gleitringes (4) gegenübersteht, und der Gleitring (4) mittels eines Federelementes (23), insbesondere mittels einer Wellfeder, zwischen der Stirnseite und dem Gehäuseboden (6.3) elastisch am Gehäuseboden (6.3) abgestützt ist.

13. Gleitringdichtung gemäß einem der Ansprüche 1 bis 12, **dadurch gekennzeichnet, dass** der Flansch (6.2) einen Drehzahlsensor (36) trägt, der mit einem Geber (37) im rotierenden Bauteil (3), insbesondere im Gegenring (25), zusammenarbeitet.

14. Drehdurchführung mit einem stationären Bauteil (2) und einem rotierenden Bauteil (3) und einem mit einer Gleitringdichtung gemäß einem der Ansprüche 1 bis 13 abgedichteten Kanal (1), der sich in dem stationären Bauteil (2) und dem rotierenden Bauteil (3) erstreckt, wobei der Flansch (6.2) verdrehsicher am stationären Bauteil (2) oder am rotierenden Bauteil (3) angeschlossen ist.

15. Drehdurchführung gemäß Anspruch 14 mit einer Gleitringdichtung (4) gemäß einem der Ansprüche 1 bis 13, **dadurch gekennzeichnet, dass** der Flansch (6.2) verdrehsicher am stationären Bauteil (2) angeschlossen ist und das stationäre Bauteil (2) eine den Umfangsteil (6.1) des Gehäuses (6), insbesondere anliegend, umschließende Innenwandung (19) aufweist, in welcher eine wenigstens in der Umfangsrichtung begrenzte Aussparung (20) vorgesehen ist, die angeordnet und dimensioniert ist, den stationären Sensor (13) aufzunehmen.

16. Drehdurchführung gemäß Anspruch 15, **dadurch gekennzeichnet, dass** im stationären Bauteil (2) wenigstens ein Leckagekanal (21), insbesondere in Form einer Bohrung, vorgesehen ist, welcher durch die Gleitringdichtung (4) übertretendes Fluid aus dem stationären Bauteil (2) abführt, und wenigstens ein Anschlusskabel (14) des stationären Sensors (13) durch den Leckagekanal (21) geführt ist, wobei das Anschlusskabel (14) insbesondere ausgehend vom stationären Sensor (13) vorher durch die Längsnut (15) durchgeführt ist.

## Claims

1. Mechanical seal for sealing at least one fluid-carrying channel (1) and/or space extending in a stationary component (2) and/or a rotating component (3) from the environment,
having a mechanical seal ring (4) which is supported in a sealing manner in the axial direction against a mating ring (25) and, to compensate for wear on its end sealing surface (5) or on a mating face, is supported elastically and movably in the axial direction with this sealing surface (5) against the mating ring (25);
having a housing (6) which movably accommodates the mechanical seal ring (4) in the axial direction and encloses the mechanical seal ring (4) with a circumferential part (6.1) in the peripheral direction; wherein
the housing (6) has a flange (6.2) adjoining the circumferential part (6.1) in the axial direction, wherein the flange (6.2) forms at least one radially inwardly facing projection (7) and the mechanical seal ring (4) comprises a stop face (8) which is opposite the radially inwardly facing projection (7) in the axial direction and with which the mechanical seal ring (4) strikes against the projection (7) during a maximum permissible movement in the axial direction in direction out of the housing, and
the flange (6.2) forms at least one radially outwardly facing projection (9);
**characterized in that**
the flange (6.2) is designed integrally with the circumferential part (6.1) or is connected to the latter in a material-bonded manner;
the flange (6.2) can be connected or is connected non-rotatably to one of the two components (2, 3) receiving the housing (6); and
the mechanical seal has a position sensor (11) for detecting the position of the mechanical seal ring (4) in the axial direction, having an encoder (12) fixed to the mechanical seal ring (4) and moving with the mechanical seal ring (4) in the axial direction, and having a stationary sensor (13) which is positioned radially outside the circumferential part (6.1) and detects the position of the encoder (12) in the axial direction, wherein the sensor (13) is supported by the circumferential part (6.1) and/or by the flange (6.2).

2. Mechanical seal according to claim 1, **characterized in that** the flange (6.2) is annular and in particular flat and projects radially inwards as well as radially outwards beyond the circumferential part (6.1).

3. Mechanical seal according to one of claims 1 or 2, **characterized in that** the mechanical seal ring (4) is held non-rotatably in the housing (6), in particular by means of an undercut.

4. Mechanical seal according to one of the claims 1 to 3, **characterized in that** the flange (6.2) has radial recesses and/or radial projections (29) for non-rotatably connecting the flange (6.2) to the component (2, 3), said radial recesses and/or projections being arranged distributed over the circumference and being positioned one behind the other in the circumferential direction.

5. Mechanical seal according to one of claims 1 to 4, **characterized in that** the flange (6.2) has through-holes (10) distributed over the circumference and positioned one behind the other in the circumferential direction for non-rotatably connecting the flange (6.2) to the component (2, 3).

6. Mechanical seal according to one of claims 1 to 5, **characterized in that** the housing (6) is made of sheet metal, wherein the flange (6.2) is welded in particular to the circumferential part (6.1).

7. Mechanical seal according to one of claims 1 to 6, **characterized in that** the flange (6.2) is non-rotatably connected to a bearing housing (30) which receives bearings (26), in particular roller bearings, for supporting the rotating component (3).

8. Mechanical seal according to one of claims 1 to 7, **characterized in that** the flange (6.2) has a bracket (14) extending in the axial direction and in the circumferential direction, tangential direction or obliquely outwards, which bracket (14) is designed in particular as a sheet metal strip welded to the flange (6.2), wherein the bracket (14) is positioned at a distance from the circumferential part (6.1) and carries the stationary sensor (13), in particular on its surface facing the circumferential part (6.1).

9. Mechanical seal according to one of claims 1 to 8, **characterized in that** the flange (6.2) has at least one longitudinal groove (15) penetrating it, which extends in particular in the tangential direction, obliquely outwards or in the circumferential direction and which accommodates at least one connecting cable (16) of the stationary sensor (13).

10. Mechanical seal according to one of claims 1 to 9, **characterized in that** the encoder (12) is inserted into a radial bore (17) of the mechanical seal ring (4) and, in particular, is flush with the mechanical seal ring (4) radially on the outside.

11. Mechanical seal according to one of claims 1 to 10, **characterized in that** the encoder (12) comprises at least one magnet (18) or is formed thereby, and the stationary sensor (13) is designed as a Hall sensor which detects the position of the magnet (18) in the axial direction.

12. Mechanical seal according to one of claims 1 to 11, **characterized in that** the housing (6) has a housing base (6.3) which is opposite an end face of the mechanical seal ring (4) facing away from the sealing surface (5), and the mechanical seal ring (4) is supported elastically on the housing base (6.3) by means of a spring element (23), in particular by means of a corrugated spring, between the end face and the housing base (6.3).

13. Mechanical seal according to one of claims 1 to 12, **characterized in that** the flange (6.2) carries a speed sensor (36) which cooperates with an encoder (37) in the rotating component (3), in particular in the mating ring (25).

14. Rotary union, having a stationary component (2) and a rotating component (3) and a channel (1) which is sealed with a mechanical seal according to one of claims 1 to 13 and extends in the stationary component (2) and the rotating component (3), wherein the flange (6.2) is non-rotatably connected to the stationary component (2) or the rotating component (3).

15. Rotary union according to claim 14, having a mechanical seal ring (4) according to one of claims 1 to 13, **characterized in that** the flange (6.2) is non-rotatably connected to the stationary component (2) and the stationary component (2) has an inner wall (19) which surrounds the circumferential part (6.1) of the housing (6), in particular in a bearing manner, and in which a recess (20) limited at least in the circumferential direction is provided, which is arranged and dimensioned to accommodate the stationary sensor (13).

16. Rotary union according to claim 15, **characterized in that** at least one leakage channel (21), in particular in the form of a bore, is provided in the stationary component (2), which channel (21) discharges fluid which passes through the mechanical seal ring (4) from the stationary component (2), and at least one connecting cable (14) of the stationary sensor (13) is guided through the leakage channel (21), wherein the connecting cable (14), in particular starting from the stationary sensor (13), is previously guided through the longitudinal groove (15).

## Revendications

1. Garniture mécanique d'étanchéité pour assurer l'étanchéité par rapport à l'environnement d'au moins un canal (1) conduisant un fluide et/ou d'un espace s'étendant dans un composant stationnaire (2) et/ou un composant rotatif (3), comprenant une bague glissante (4) qui est appuyée de manière étanche dans la direction axiale contre une bague opposée (25) et qui, pour compenser une usure sur sa surface d'étanchéité frontale (5) ou sur une surface opposée, est appuyée de manière élastique et de manière mobile dans la direction axiale par cette surface d'étanchéité (5) contre la bague opposée (25) ;
avec un boîtier (6) recevant la bague glissante (4) de manière mobile dans la direction axiale, lequel entoure la bague glissante (4) par une partie circonférentielle (6.1) dans la direction circonférentielle ;
le boîtier (6) présentant une bride (6.2) se raccordant à la partie circonférentielle (6.1) dans la direction axiale, la bride (6.2) formant au moins une saillie (7) dirigée radialement vers l'intérieur et la bague glissante (4) présentant une surface de butée (8) opposée à la saillie (7) dirigée radialement vers l'intérieur dans la direction axiale, avec laquelle la bague glissante (4) vient en butée contre la saillie (7) lors d'un mouvement maximal admissible dans la direction axiale en direction de sortie du boîtier (6), et
la bride (6.2) forme au moins une saillie (9) dirigée radialement vers l'extérieur ; **caractérisée en ce que** la bride (6.2) est réalisée d'une seule pièce avec la partie circonférentielle (6.1) ou est raccordée à celle-ci par une liaison par matière ;
la bride (6.2) peut être raccordée ou est raccordée par ladite au moins une saillie (9) dirigée radialement vers l'extérieur à l'un des deux composants (2, 3) recevant le boîtier (6) sans possibilité de rotation ; et
la garniture mécanique d'étanchéité présente un capteur de position (11) pour détecter la position de la bague glissante (4) dans la direction axiale, avec un transmetteur (12) fixé à la bague glissante (4) et se déplaçant avec la bague glissante (4) dans la direction axiale, et un capteur stationnaire (13) positionné radialement à l'extérieur de la partie circonférentielle (6.1), qui détecte la position du transmetteur (12) dans la direction axiale, le capteur (13) étant porté par la partie circonférentielle (6.1) et/ou par la bride (6.2).

2. Garniture mécanique d'étanchéité selon la revendication 1, **caractérisée en ce que** la bride (6.2) est en forme d'anneau de cercle et en particulier plane et dépasse radialement vers l'intérieur comme radialement vers l'extérieur de la partie circonférentielle (6.1).

3. Garniture mécanique d'étanchéité selon l'une des revendications 1 ou 2, **caractérisée en ce que** la bague glissante (4) est maintenue dans le boîtier (6) sans possibilité de rotation, en particulier au moyen d'une contre-dépouille.

4. Garniture mécanique d'étanchéité selon l'une des revendications 1 à 3, **caractérisée en ce que** la bride (6.2) présente des évidements radiaux et/ou des saillies radiales (29) répartis sur la circonférence et positionnés les uns derrière les autres dans la direction circonférentielle pour raccorder la bride (6.2) au composant (2, 3) sans possibilité de rotation.

5. Garniture mécanique d'étanchéité selon l'une des revendications 1 à 4, **caractérisée en ce que** la bride (6.2) présente des ouvertures de passage (10) réparties sur la circonférence et positionnées les unes derrière les autres dans la direction circonférentielle pour raccorder la bride (6.2) au composant (2, 3) sans possibilité de rotation.

6. Garniture mécanique d'étanchéité selon l'une des revendications 1 à 5, **caractérisée en ce que** le boîtier (6) est réalisé en tôle, la bride (6.2) étant en particulier soudée sur la partie circonférentielle (6.1).

7. Garniture mécanique d'étanchéité selon l'une des revendications 1 à 6, **caractérisée en ce que** la bride (6.2) est raccordée sans possibilité de rotation à un logement de palier (30) qui reçoit des paliers (26), en particulier des paliers à roulement, pour monter le composant rotatif (3).

8. Garniture mécanique d'étanchéité selon l'une des revendications 1 à 7, **caractérisée en ce que** la bride (6.2) présente une console (14) s'étendant dans la direction axiale et dans la direction circonférentielle, dans la direction tangentielle ou obliquement vers l'extérieur, qui est réalisée en particulier sous la forme d'une bande de tôle soudée sur la bride (6.2), la console (14) étant positionnée à distance de la partie circonférentielle (6.1) et portant le capteur stationnaire (13), en particulier sur sa surface tournée vers la partie circonférentielle (6.1).

9. Garniture mécanique d'étanchéité selon l'une des revendications 1 à 8, **caractérisée en ce que** la bride (6.2) présente au moins une rainure longitudinale (15) la traversant, qui s'étend en particulier dans la direction tangentielle, obliquement vers l'extérieur ou dans la direction circonférentielle, laquelle reçoit au moins un câble de raccordement (16) du capteur stationnaire (13).

10. Garniture mécanique d'étanchéité selon l'une des revendications 1 à 9, **caractérisée en ce que** le transmetteur (12) est introduit dans un alésage radial (17) de la bague glissante (4) et se termine, en particulier radialement vers l'extérieur, au même niveau que la bague glissante (4).

11. Garniture mécanique d'étanchéité selon l'une des revendications 1 à 10, **caractérisée en ce que** le transmetteur (12) comprend au moins un aimant (18) ou est formé par celui-ci et le capteur stationnaire (13) est réalisé sous la forme d'un capteur à effet Hall qui détecte la position de l'aimant (18) dans la direction axiale.

12. Garniture mécanique d'étanchéité selon l'une des revendications 1 à 11, **caractérisée en ce que** le boîtier (6) présente un fond de boîtier (6.3) qui fait face à une face frontale de la bague glissante (4) opposée à la surface d'étanchéité (5), et la bague glissante (4) est appuyée de manière élastique sur le fond de boîtier (6.3) au moyen d'un élément élastique (23), en particulier au moyen d'un ressort ondulé, entre la face frontale et le fond de boîtier (6.3).

13. Garniture mécanique d'étanchéité selon l'une des revendications 1 à 12, **caractérisée en ce que** la bride (6.2) porte un capteur de vitesse de rotation (36) qui coopère avec un transmetteur (37) dans le composant rotatif (3), en particulier dans la bague opposée (25).

14. Joint tournant comprenant un composant stationnaire (2) et un composant rotatif (3) ainsi qu'un canal (1) rendu étanche par une garniture mécanique d'étanchéité selon l'une des revendications 1 à 13, qui s'étend dans le composant stationnaire (2) et le composant rotatif (3), la bride (6.2) étant raccordée au composant stationnaire (2) ou au composant rotatif (3) sans possibilité de rotation.

15. Joint tournant selon la revendication 14 comprenant une garniture mécanique d'étanchéité (4) selon l'une des revendications 1 à 13, **caractérisé en ce que** la bride (6.2) est raccordée au composant stationnaire (2) sans possibilité de rotation et le composant stationnaire (2) présente une paroi intérieure (19) entourant la partie circonférentielle (6.1) du boîtier (6), en particulier en s'y appliquant, dans laquelle est prévu un évidement (20) limité au moins dans la direction circonférentielle, qui est disposé et dimensionné pour recevoir le capteur stationnaire (13).

16. Joint tournant selon la revendication 15, **caractérisé en ce que** dans le composant stationnaire (2) est prévu au moins un canal de fuite (21), en particulier sous la forme d'un alésage, qui évacue du composant stationnaire (2) le fluide débordant de la garniture mécanique d'étanchéité (4), et au moins un câble de raccordement (14) du capteur stationnaire (13) est guidé à travers le canal de fuite (21), le câble de raccordement (14) étant passé auparavant à travers la rainure longitudinale (15), en particulier à partir du capteur stationnaire (13).
